# EUROPEAN PATENT SPECIFICATION

(11) **EP 1 728 837 B1**
(45) Date of publication and mention of the grant of the patent: **19.05.2010**
(21) Application number: 06011251.3
(22) Date of filing: 31.05.2006
(51) Int. Cl.: C09D 11/00, C09D 17/00, C09B 67/00

(54) **Pigment dispersion, inkjet ink using the pigment dispersion, method for preparing the pigment dispersion and image forming method using the inkjet ink**
Pigmentdispersion, Tinte für den Tintenstrahldruck enthaltend diese Dispersion, Herstellungsmethode für die Pigment Dispersion und die Tinte benutzendes Druckverfahren
Dispersion de pigment, encre par jet d'encre utilisant cette dispersion de pigment, procédé de production pour la dispersion de pigment et méthode utilisant l'encre par jet d'encre

(30) Priority: 01.06.2005 JP 2005160802
(43) Date of publication of application: 06.12.2006
(73) Proprietor: Ricoh Company, Ltd., Tokyo 143-8555 (JP)
(72) Inventor: Hakiri, Minoru, Ohta-ku Tokyo 143-8555 (JP); Taniguchi, Keishi, Ohta-ku Tokyo 143-8555 (JP); Hasegawa, Shin, Ohta-ku Tokyo 143-8555 (JP); Natori, Yuji, Ohta-ku Tokyo 143-8555 (JP); Hosogi, Yasuyuki, Ohta-ku Tokyo 143-8555 (JP); Hatada, Shigeo, Ohta-ku Tokyo 143-8555 (JP)
(74) Representative: Barz, Peter

(56) References cited:
- EP-A- 0 767 225
- EP-A- 0 921 163
- EP-A- 1 116 757
- EP-A- 1 416 020
- US-A1- 2003 130 377
- PATENT ABSTRACTS OF JAPAN vol. 2003, no. 12, 5 December 2003 (2003-12-05) & JP 2004 238573 A (RICOH CO LTD), 26 August 2004 (2004-08-26)
- PATENT ABSTRACTS OF JAPAN vol. 2003, no. 12, 5 December 2003 (2003-12-05) & JP 2004 169008 A (RICOH CO LTD), 17 June 2004 (2004-06-17)

## Description

### BACKGROUND OF THE INVENTION

### Field of the Invention

The present invention relates to a pigment dispersion, an inkjet ink, a method for preparing a pigment dispersion, and an image forming method using the inkjet ink.

### Discussion of the Background

Inkjet recording methods have the following advantages over other image recording methods:
(1) The inkjet recording process is relatively simple compared to other image recording methods, and full color images can be easily produced; and
(2) Although inkjet printers have a simple configuration, the printers can produce high-resolution color images.

Dye-based inkjet inks in which a water-soluble dye is dissolved in water or a mixture solvent of water and an organic solvent have been typically used as inkjet inks. However, dye-based inkjet inks have a drawback in that the resultant images have poor light resistance, although the dye-based inkjet inks can produce color images having good chroma. In contrast, pigment-based inkjet inks in which one or more pigments such as carbon black and various organic pigments are dispersed in a dispersion medium have a relatively good light resistance compared to dye-based inkjet inks. Therefore, pigment-based inkjet inks have been actively investigated.

However, pigment-based inkjet inks have a drawback of frequently causing a clogging problem in that inkjet nozzles are clogged with the inks, resulting in formation of images having omissions and/or low density.

Pigment-based inks are typically prepared by the following method:
(1) One or more colorants (i.e., pigments) and one or more dispersant are preliminarily dispersed in an aqueous solvent such as water and alcohols to prepare a first dispersion;
(2) The first dispersion is subjected to a dispersion treatment using a media-containing dispersing machine such as sand mills and bead mills so that the pigments in the resultant dispersion have a desired particle diameter; and
(3) The dispersion is diluted so as to have a predetermined pigment concentration, resulting in preparation of an ink.

The dispersion treatment using a sand mill or a bead mill is performed until the pigments in the dispersion have a predetermined particle diameter while properly controlling the dispersing conditions, such as tip speed of the rotor, dispersion time, flow rate of the first dispersion, dispersion temperature, and filling factor of the media. However, when the dispersion treatment is performed using a media-containing or media-free mill alone, the resultant dispersion has insufficient dispersion stability even when the pigments therein have a desired particle diameter. Namely, when such a dispersion is preserved for a long period of time or the resultant ink is preserved for a long period of time, the ink often causes the clogging problem mentioned above.

Pigment-based aqueous inks typically include a surfactant or a water-soluble resin to well disperse a hydrophobic pigment in the aqueous dispersion medium. However, such inkjet inks have poor reliability. In attempting to solve the problem, a technique in that a film-formable particulate resin is added to an inkjet ink is disclosed. However, it is difficult to disperse fine particles of plural components to such an extent as to maintain the dispersion state for a long period of time. When a large amount of dispersant (such as surfactants) is added to the dispersion in attempting to stably disperse such fine particles, problems in that air voids are formed in an ink tank or an inkjet printhead, and image qualities deteriorate (such as formation of blurred images) are caused. In addition, a technique in that a pigment, the surface of which is modified to have a hydrophilic property, is used and a technique in that a resin having a hydrophilic group is added to an ink have been proposed. These techniques can be well applied to a dispersion including only one pigment or only one resin, but cannot be applied to a dispersion including plural kinds of pigments or resins because the resultant dispersion have poor long-term dispersion stability.

Published unexamined Japanese patent application No. (hereinafter referred to as JP-A) 05-239392 discloses an ink including a water-dispersible resin having both a carboxyl group and a nonionic hydrophilic group. JP-A 08-283633 discloses an ink including a water soluble polymer and a surfactant having the same polarity as that of the polymer or a nonionic surfactant. JP-A 2000-63727 discloses an ink including an ionic polyester resin and a colorant having a hydrophilic group having the same polarity as that of the polyester resin. JP-A 2001-81366 discloses an ink including a pigment and a particulate resin, wherein the pigment and resin dispersed in a dispersion medium have the same polarity.

JP-A 08-333531 discloses an aqueous inkjet ink including a pigment dispersion in which the pigment has a particle diameter distribution such that at least 70% of particles of the pigment have a particle diameter of less than 0.1 µm and the other particles have a particle diameter of 0.1 µm or less; an aldehyde naphthalene sulfonate dispersant; and/or at least one sulfone solvent. In addition, JP-A 56-147871 discloses a recording ink including an aqueous medium, a pigment, a polymer dispersant and a nonionic surfactant. Further, US patents Nos. 5085698 and 5221334 have disclosed a technique in that a block copolymer having a unit of AB or BAB is used as a dispersant. Furthermore, US patent No. 5172133 discloses an ink including a specific pigment, a water-soluble resin and a solvent.

In addition, JP-A 2000-144028 discloses an inkjet ink in which the particles dispersed therein have a volume average particle diameter of from 30 to 200 nm.

However, black inkjet inks prepared by the above-mentioned techniques do not necessarily have satisfactory properties.

Further, JP-A 2001-192583 discloses an inkjet ink using a dispersant having a specific formula. In addition, JP-A 2004-2715 discloses an inkjet ink in which the pigment particles dispersed therein have an average particle diameter of not greater than 50 nm and the standard deviation of the pigment particles is smaller than the average particle diameter.

There is a continuing need for an inkjet ink which has a good combination of discharging stability and preservation stability and which can produce images having high chroma and image density.

### SUMMARY OF THE INVENTION

As an aspect of the present invention, a method for preparing a pigment dispersion is provided which includes:
subjecting a mixture including at least a pigment, a dispersant and water to a dispersion treatment using a media mill to prepare a first dispersion; and
then subj ecting the first dispersion to a second dispersion treatment using a media-less mill to prepare the pigment dispersion,
wherein when the pigment is a pigment other than carbon black, the pigment in the pigment dispersion has a particle diameter distribution property such that the average particle diameter (D50) of from 20 to 130 nm (which is determined by a dynamic light scattering method), and the standard deviation of particle diameter of the pigment is less than the average particle diameter (D50), and when the pigment is a carbon black, the pigment in the pigment dispersion has a particle diameter distribution property such that the average particle diameter (D50) of from 70 to 180 nm (which is also determined by a dynamic light scattering method), and the standard deviation of particle diameter of the pigment is not greater than one half of the average particle diameter (D50).

As another aspect of the present invention, a pigment dispersion is provided which includes at least a pigment (except carbon black), a dispersant and water, wherein the pigment in the pigment dispersion has an average particle diameter (D50) of from 20 to 130 nm, and the standard deviation of the particle diameter of the pigment is less than the average particle diameter (D50). When the pigment is a carbon black, the pigment in the pigment dispersion has an average particle diameter (D50) of from 70 to 180 nm, and the standard deviation of the particle diameter of the pigment is not greater than one half of the average particle diameter (D50).

As yet another aspect of the present invention, an inkjet ink is provided which includes:
the pigment dispersion mentioned above; and
at least one member selected from the group consisting of water, water-soluble organic solvents and surfactants.

As a further aspect of the present invention, an image forming method is provided which includes:
discharging the inkjet ink mentioned above from a nozzle to form an image on a recording material.

These and other objects, features and advantages of the present invention will become apparent upon consideration of the following description of the preferred embodiments of the present invention taken in conjunction with the accompanying drawings.

### BRIEF DESCRIPTION OF THE DRAWINGS

Fig. 1 is a schematic view illustrating a serial inkjet printer for use in the image forming method of the present invention;
Fig. 2 is a perspective view of an ink cartridge containing the inkjet ink of the present invention;
Fig. 3 is a cross sectional view of the ink cartridge illustrated in Fig. 2; and
Fig. 4 is a perspective view of another ink cartridge, which contains the inkjet ink of the present invention and which is integrated with a recording head; and
Fig. 5 is a cross section of a recording head for use in the image forming method of the present invention.

### DETAILED DESCRIPTION OF THE INVENTION

As a result of the present inventors' study, it is found that an inkjet ink which has a good combination of discharging stability and preservation stability and which can produce images having high chroma and image density can be provided using the following pigment dispersion.

Specifically, the pigment dispersion is prepared by subjecting a liquid including at least a pigment, a dispersant and water to a first dispersion treatment using a media mill to prepare a first dispersion; and then subjecting the first dispersion to a second dispersion treatment using a media-less mill to prepare the pigment dispersion, wherein the pigment in the pigment dispersion has an average particle diameter (D50) of from 20 to 130 nm (which is determined by a dynamic light scattering method), and the standard deviation of particle diameter of the pigment is less than the average particle diameter (D50) when the pigment is a pigment other than carbon black. When a carbon black is used as the pigment, the average particle diameter (D50) of the pigment in the pigment dispersion is preferably from 70 to 180 nm (which is also determined by a dynamic light scattering method) and the standard deviation of the particle diameter of the pigment is not greater than one half of the average particle diameter (D50).

In this application, the media mill is defined as a mill which disperses a pigment in a solvent using a medium such as beads made of hard materials (e. g. , glass beads, aluminum beads, zirconia beads, and zircon beads). The media-less mill is defined as a mill which disperses a pigment in a solvent without using such a medium.

The dispersant is preferably a surfactant, and more preferably a compound having the following formula (1): 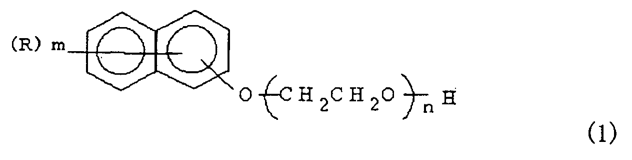 wherein n is an integer of from 20 to 200; R represents an alkyl group having 1 to 20 carbon atoms, an aryl group and an aralkyl group; and m is 0 or an integer of from 1 to 7.

The added amount of the dispersant is preferably from 0.1 to 2 parts by weight per 1 part by weight of the pigment. The added amount of the pigment is from 5 to 50% by weight based on the total weight of the pigment dispersion.

When the first dispersion is prepared using a media mill, the average particle diameter (D50) thereof is preferably from 100 to 300 nm. More preferably, at first a mixture including at least a pigment, a dispersant and water is subjected to a preliminary dispersion treatment using a media-less mill to prepare a preliminary dispersion in which the dispersed pigment has an average particle diameter of from 200 to 600 nm; and then the preliminary dispersion is subjected to a first dispersion treatment using a media mill to prepare a first dispersion in which the dispersed pigment has an average particle diameter of from 80 to 130 nm, followed by a second dispersion treatment using a media-less mill to prepare the pigment dispersion.

When the pigment is a yellow pigment, at least one of the following yellow pigments is preferably used.

Pigment Yellow 1, 2, 3, 12, 13, 14, 16, 17, 73, 74, 75, 83, 93, 95, 97, 98, 114, 120, 128, 129, 138, 150, 151, 154, 155, 174 and 180.

When the pigment is a magenta pigment, at least one of the following magenta pigments is preferably used.

Pigment Red 5, 7, 12, 48 (Ca), 48 (Mn), 57 (Ca), 57:1, 112, 122, 123, 146, 168, 176, 184, 185 and 202, and Pigment Violet 19.

When the pigment is a cyan pigment, at least one of the following cyan pigments is preferably used.

Pigment Blue 1, 2, 3, 15, 15:3, 15:4, 16, 22, 60, 63 and 66.

The present invention will be explained in detail.

In the pigment dispersion of the present invention including a pigment (other than carbon black), a dispersant and water, pigment particles are dispersed so as to have an average particle diameter (D50) of from 20 nm to 130 nm, preferably from 20 to 120 nm, more preferably from 20 to 100 nm, even more preferably from 20 to 70 nm and still more preferably from 20 to 50 nm, and a particle diameter distribution such that the standard deviation of particle diameter is less than the average particle diameter (D50), preferably from 5 to 80 nm and more preferably from 5 to 50 nm. When the average particle diameter (D50) is too large, chroma of the resultant images deteriorates.

When the pigment included in the dispersion is a carbon black, the average particle diameter (D50) of the pigment is from 70 nm to 180 nm, preferably from 70 to 150 nm and more preferably from 75 to 120 nm, and the standard deviation of particle diameter is less than one half of the average particle diameter (D50). When the average particle diameter (D50) of the pigment (i.e., carbon black) is too small, the resultant images have a low density. In contrast, when the average particle diameter (D50) is too large, it takes a long time when the dispersion is filtered, resulting in deterioration of productivity, and in addition the clogging problem is easily caused. If the standard deviation is too large, it takes a long time when the dispersion is filtered to remove coarse particles therefrom, resulting in deterioration of productivity, and in addition the clogging problem is easily caused.

In the present application, the average particle diameter (D50) and the standard deviation of particle diameter of pigment particles in a pigment dispersion are determined using a particle diameter analyzer UPA 150 from Nikkiso Co. , Ltd. In this regard, the average particle diameter is on a volume basis.

The average particle diameter (D50) and the standard deviation of particle diameter can be controlled by controlling factors such as the peripheral speed of a rotor of the dispersing machine (i.e.,mediamillsandmedia-lessmills) used, dispersing time, flow rate of the liquid to be dispersed (i.e., the ink constituent mixture, preliminary dispersion, and first dispersion), and temperature of the liquid to be dispersed. When the peripheral speed of a rotor is too high, pigment particles in the pigment dispersion tend to aggregate. In contrast, when the peripheral speed of a rotor is too low, pigment particles cannot be well dispersed, or dispersion efficiency deteriorates, resulting in deterioration of productivity.

When a pigment dispersion is prepared, the following dispersing method is preferably used.
(1) At first an ink constituent mixture including at least a pigment, a dispersant and water is subjected to a first dispersing treatment using a media mill such that the pigment particles in the dispersion have an average particle diameter (D50) of from 100 nm to 300 nm, preferably from 80 to 200 nm, and more preferably from 60 to 160 nm; and
(2) the dispersion is then subjected to a second dispersing treatment using a media-less mill to prepare the pigment dispersion.

The following method can also be preferably used.
(1) At first an ink constituent mixture including at least a pigment, a dispersant and water is preliminarily dispersed using a media-less mill such that the pigment particles in the dispersion have an average particle diameter (D50) of from 200 nm to 600 nm, preferably from 150 to 400 nm, and more preferably from 130 to 200 nm to prepare a preliminary dispersion;
(2) the preliminary dispersion is then subjected to a first dispersion treatment using a media mill such that the pigment particles in the resultant first dispersion have an average particle diameter (D50) of from 80 nm to 130 nm, preferably from 40 to 110 nm, and more preferably from 20 to 90 nm; and
(3) the first dispersion is then subjected to a second dispersion treatment using a media-less mill to prepare the pigment dispersion.

When a bead mill is used as the media mill, the average particle diameter (D50) and the standard deviation of particle diameter can be controlled by controlling the diameter of the beads (i.e., media) used. For example, when a pigment dispersion including pigment particles having an average particle diameter (D50) of not greater than 50 nm is prepared, it is preferable to use beads having a diameter of from 0.1 to 1.0 mm, and more preferably from 0.1 to 0.5 mm. By using this dispersing method, a pigment dispersion in which the standard deviation of particle diameter of the pigment particles therein is less than the average particle diameter (D50) of the pigment particles can be prepared.

The pigment dispersion of the present invention can be prepared by dispersing an ink constituent mixture, which includes at least a pigment, a dispersant and water and which optionally includes additives, using a media-containing mill and a media-free mill. Specific examples of the media-containing mill include DYNO-MILL of KDL series (from Shinmaru Enterprises Corporation), AGITATOR MILL LMZ (from Ashizawa Fine Tech Co. , Ltd.), SC MILL (from Mitsui Mining Co., Ltd.), etc.

Then the first dispersion is further subjected to a second dispersion treatment using a media-free mill. Specific examples of the media-free mill include high shearing force type mills such as CLEAR SS5 (from M Technique Co., Ltd.), CAVITRON CD1010 (from EUROTECH, LTD.), and MODULE DR2000 (from Shinmaru Enterprises Corporation); thin film circling type mills such as TK FILMIX (Tokushu Kika Kogyo Co., Ltd.); and super high pressure collision type mills such as Ultimizer System (from Sugino Machine Ltd.) and Nanomizer (Yoshida Kikai Co., Ltd.). By performing this second dispersing treatment using a media-free mill after the first dispersion treatment, the resultant dispersion has good dispersion stability.

It is preferable to perform a preliminary dispersion treatment using a media-less mill before the first dispersion treatment using a media mill. In this case, the content of coarse particles (having a particle diameter of not less than 1 µm) of a pigment in an ink constituent mixture can be decreased, and thereby the standard deviation of particle diameter of pigment particles in the resultant pigment dispersion can be decreased.

When a pigment is dispersed, a dispersant is preferably included in the ink constituent mixture in an amount of from 0.1 to 2 parts by weight, and more preferably from 0.25 to 1 part by weight, per 1 part by weight of the pigment used. By including a dispersant in such an amount, the resultant pigment dispersion has good preservation stability. In addition, the resultant ink has a good combination of discharge stability and preservation stability, and can produce high density images.

When the added amount of a dispersant is too small, the preservation stability of the resultant pigment dispersion and the resultant inkjet ink deteriorates, and thereby the clogging problem tends to occur. In contrast, when the added amount of a dispersion is too large, the viscosity of the resultant pigment dispersion and the resultant inkjet ink seriously increases. Therefore, the ink cannot be used as an inkjet ink.

Specific examples of the materials for use as the dispersant include styrene-acrylic copolymers, styrene-maleic acid copolymers, sodium naphthalene sulfonate - formaldehyde condensation products, polyethylene glycol alkyl phenyl ethers, sulfates of polyethylene glycol alkyl phenyl ethers, phosphates of polyethylene glycol alkyl phenyl ethers, etc. By using such a dispersant, a dispersion including a carbon black having a particle diameter distribution such that the average particle diameter (D50) is from 70 to 180 nm and the standard deviation of particle diameter is not greater than one half of the average particle diameter (D50) can be prepared in a short period of time.

It is more preferable to use a dispersant having the following formula (1):

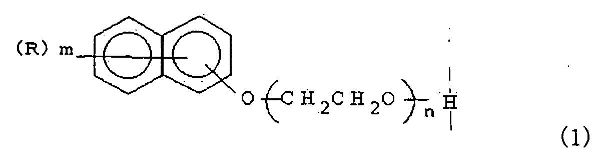

In formula (1), n is preferably an integer of from 20 to 200, and more preferably from 30 to 60. When n is too small, the resultant dispersion and the resultant ink have poor dispersibility. In contrast, when n is too large, the viscosity of the resultant dispersion and the resultant ink seriously increases.

Among the dispersants having formula (1), polyoxyethylene (n=40) β-naphthyl ether (m=0), polyoxyethylene (n=40) 1-methyl-β-naphthyl ether (R= methyl group, and m=1), and polyoxyethylene (n=60) 1,5-dimethyl-β-naphthyl ether (R= methyl group, and m=2) are more preferably used.

Suitable carbon blacks for use in the pigment dispersion include furnace carbon blacks and channel carbon blacks. Specific examples of the marketed carbon blacks include #45L, MCF88, #990, MA600, #850 (which are manufactured by Mitsubishi Chemical Corporation), NIPEX150, NIPEX160, NIPEX180 (which are manufactured by Degussa A.G.), REGAL400R, REGAL600R, and MOGULE L (which are manufactured by Cabot Corporation).

When the pigment dispersion of the present invention is prepared, the content of a pigment in the dispersion is preferably from 5 to 50% by weight based on the total weight of the dispersion. When the pigment content is too low, the productivity of the dispersion deteriorates. In contrast, when the pigment content is too high, the viscosity of the ink constituent mixture to be dispersed seriously increases, and thereby the pigment cannot be well dispersed.

The pigment dispersion of the present invention can optionally include additives such as water soluble organic solvents, surfactants and antiseptics.

Specific examples of the water soluble organic solvents include alcohols such as methanol, ethanol, 1-propanol and 2-propanol; polyalcohols such as ethylene glycol, diethylene glycol, triethylene glycol, propylene glycol and glycerin; pyrrolidone derivatives such as N-methyl pyrrolidone and 2-pyrrolidone; ketones such as acetone and methyl ethyl ketone; alkanol amines such as monethanol amine, diethanol amine and triethanol amine; etc.

With respect to surfactants, nonionic surfactants, anionic surfactants, cationic surfactants and ampholytic surfactants can be used.

When a pigment dispersion is prepared, the followingmethod is preferably used.
(1) At first, a pigment such as carbon black, a dispersant and water (and if desired additives) are mixed to prepare an ink constituent mixture;
(2) the mixture is subjected to a dispersion treatment using a media-containing dispersing machine such as sand mills, ball mills, roll mills and beads mills, to prepare a first dispersion; and
(3) the dispersion is further subjected to a second dispersion treatment using a media-free dispersing machine such as nanomizers and homogenizers.

In this regard, the added amount of the dispersant is preferably from 0.1 to 2 parts by weight per 1 part by weight of the pigment.

The thus prepared pigment dispersion can be preferably used for the inkjet ink of the present invention.

The inkjet ink of the present invention can be prepared by any known methods. For example, the following method is used.
(1) The pigment dispersion mentioned above, water, a water soluble organic solvent and/or a surfactant (and optionally additives) are mixed while agitated;
(2) the mixture is filtered using a filtering device such as screens and centrifugal filtering devices to remove coarse particles therefrom; and
(3) the filtered mixture is optionally deaerated to prepare an inkjet ink.

The content of a pigment in the ink is preferably from 1 to 20% by weight based on the total weight of the ink. When the content of a pigment is too low, the resultant ink produces images with poor clearness. In contrast, when the content is too high, the viscosity of the resultant ink seriously increases. In addition, the resultant ink easily causes the clogging problem.

The additives mentioned above for use in the pigment dispersion can be optionally added to the ink. For example, a water soluble organic solvent can be added to the ink in an amount of from 0 to 50% by weight, preferably from 5 to 40% by weight, and more preferably from 10 to 35% by weight, based on the total weight of the ink.

The thus prepared pigment-based inkjet ink can be preferably used for an ink cartridge which typically includes plural color inks each having a different color tone and which is used for forming full color images.

The ink cartridge of the present invention can be used for an inkjet printer which discharges one or more inks toward a recording material such as papers to record an image on the recording material.

The inkjet ink of the present invention can be used for continuously-projecting type inkjet recording methods (apparatus) and on-demand type inkjet recording methods (apparatus). The on-demand type inkjet recording methods include piezoelectric inkjet recording methods, thermal inkjet recording methods and electrostatic inkjet recording methods.

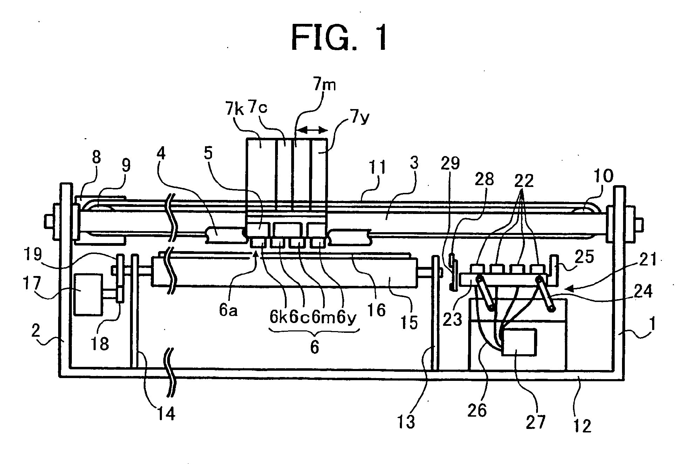

An inkjet recording apparatus for use in the image forming method of the present invention will be explained referring to FIG. 1.

FIG. 1 is a schematic view illustrating the main portion of an inkjet recording apparatus for use in the image forming method of the present invention, which is a serial inkjet recording apparatus and has an ink cartridge having an ink container containing the inkjet ink of the present invention.

In the inkjet recording apparatus as shown in FIG. 1, a main support/guide rod 3 (hereinafter a main guide rod 3) and a trailing support/guide rod 4 (hereinafter a trailing guide rod 4) are supported by side plates 1 and 2 in a manner such that the main guide rod 3 and trailing guide rod 4 are set substantially horizontally. A carriage unit 5 slides in a main scanning direction (i.e., in a direction indicated by a double-head arrow) while being supported by the main guide rod 3 and trailing guide rod 4. The carriage unit 5 has four heads 6, i.e., a yellow ink head 6y, a magenta ink head 6m, a cyan ink head 6c and a black ink head 6k, each of which discharges a yellow ink, a magenta ink, a cyan ink and a black ink, respectively. An ink discharging surface 6a (i.e., a surface havingnozzles) facesdownward. In the upper part of the carriage unit 5, fourinkcartridges 7 (7y, 7m, 7cand7k) which respectively supply the yellow, magenta, cyan or black inks to the respective heads 6y, 6m, 6c and 6k, are exchangeably set.

The carriage unit 5 is connected with a timing belt 11 which is rotated by a drive pulley 9 (i.e., a drive timing pulley), which is driven by a main scanning motor 8 and a driven pulley 10 (i.e., an idle pulley) while stretched. By driving the main scanning motor 8, the carriage 5 (i.e., four recording heads 6) slides in the main scanning direction.

Sub-flames 13 and 14 stand on a bottom plate 12 connected with the side plates 1 and 2. The sub-flames 13 and 14 rotatably support a feeding roller 15 which feeds a recording material 16 in a sub-scanning direction perpendicular to the main scanning direction. A sub-scanning motor 17 is arranged outside of the sub-flame 14. A gear 18 which is fixed on a rotation axis of the sub-scanning motor 17 is engaged with a gear 19 fixed on an axis of the feeding roller 15 to transmit the rotation of the sub-scanning motor 17 to the feeding roller 15.

At a location between the side plate 1 and sub-flame 13, a reliability maintaining mechanism 21 (hereinafter referred to as a sub-system 21) configured to maintain the reliability of the head 6 is provided. The sub-system 21 has four caps 22 which cap the four ink discharging surfaces 6a and which are supported by a holder 23. The holder 23 is slidably supported by a link member 24. When the carriage unit 5 moving toward the side plate 1 contacts a plate 25 engaged with the holder 23, the holder 23 is lifted up due to the movement of the carriage unit 5, and thereby the discharging surfaces 6a of the inkjet head 6 are capped with the caps 22. When the carriage unit 5 located on the caps 22 moves toward the side plate 2, the holder 23 is lowered due to the movement of the carriage unit 5, resulting in separation of the discharge surfaces 6a of the inkjet head 6 from the caps 22.

The caps 22 are connected with a suction pump 27 via a suction tube 26. In addition, the caps 22 have air openings which lead to air through a tube and a valve. In addition, the ink (waste ink) collected by the suction pump 27 is discharged to a waste ink tank (not shown) via a drain tube.

At a location outside the holder 23, a wiper blade 28, which is configured to wipe the discharging surfaces 6a of the inkjet head 6 and which is made of a material such as textile, foamed materials, and elastic materials (e.g., rubbers), is provided on a blade arm 29. The blade arm 29 is supported so as to be oscillated by a cam rotated by a driving device (not shown).

Suitable recording materials for use in the inkjet recording apparatus include ink-absorbable materials, such as papers, which absorb the inkjet ink, and ink-unabsorbable materials which do not absorb the inkjet ink.

Specific examples of the recording materials include sheets of plastics such as polyethylene terephthalate, polycarbonate, polypropylene, polyethylene, polysulfone, ABS resins, and polyvinyl chloride resins; metals such as brass, iron, aluminum, stainless steel and copper; materials in which a metal layer is formed on a non-metal material using a method such as deposition; papers subjected to water-repellent finishing; ceramics which are prepared by sintering inorganic materials at a high temperature, etc. Among these materials, papers are more preferable because the cost is relatively low and the images formed thereon look natural.

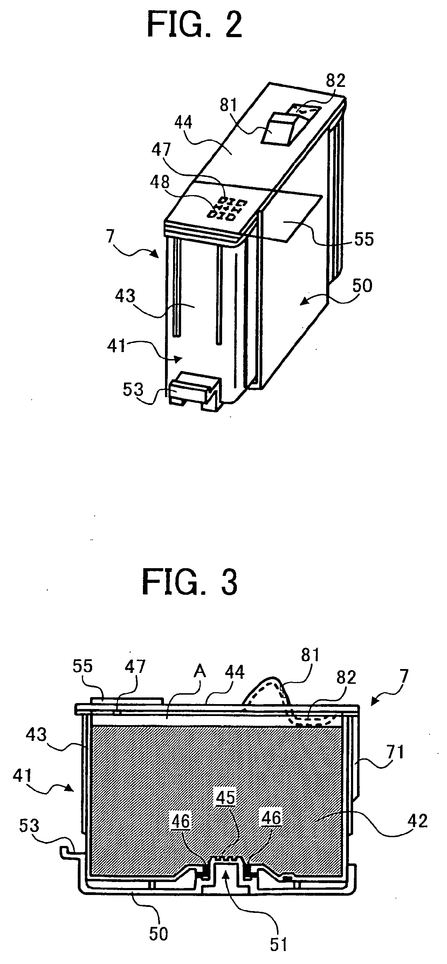

FIGs. 2 and 3 are a perspective view and a sectional front elevation of an ink cartridge 7.

As shown in FIGs. 2 and 3, the ink cartridge 7 has a cartridge main body 41 in which an ink absorber 42 is contained. The ink absorber 42 absorbs a color ink (for example, a yellow, a magenta, a cyan or a black ink). The ink is the inkjet ink of the present invention. The cartridge main body 41 has a container 43 having a large opening on an upper part thereof and a top cover 44 which is adhered on the container 43 using an adhesive or by welding. The main body 41 is made of, for example, a resin (a mold of resin). The ink absorber 42 is formed of a porous material such as urethane foams. Such a porous material is contained in the cartridge main body 41 upon application of pressure and then an ink is injected into the porous material such that the porous material absorbs the ink.

At the bottom of the cartridge main body 41, an ink supplying opening 45 is provided to supply the ink to one of the recording heads 6. A seal ring 46 is engaged with the inside periphery of the ink supplying opening 45. In addition, the upper cover 44 has an air opening 47.

The cartridge main body 41 has a cap 50. The cap 50 covers the ink supplying opening 45 to prevent the ink contained therein from leaking from the main body 41 before the cartridge is set in an inkjet recording apparatus. In addition, the cap 50 prevents the ink from leaking from the main body 41 due to deformation of the case 43 caused by the pressure applied to the wide surface of the cartridge when the cartridge is set, handled or wrapped in vacuum.

A film seal 55 having a high oxygen permeability is adhered on the air opening 47 to seal the air opening 47 as illustrated in FIG. 2. The film seal 55 seals not only the air opening 47 but also plural grooves 48 formed in the vicinity of the air opening 55. By sealing the air opening 47 with a film seal 55 having a high oxygen permeability, the ink can be effectively deaerated when the cartridge 7 is wrapped under a reduced pressure even when air is dissolved in the ink when the ink is filled in the cartridge or air present in a space A (as shown in Fig. 3) formed between the ink absorber 42 and the cartridge main body 41 is dissolved in the ink. Namely, when such a sealed ink cartridge is wrapped with a packaging material which hardly transmit air, such as films laminated with aluminum, under a reduced pressure, the air dissolved in the ink can be discharged to the space formed between the cartridge main body 41 and the wrapping material.

Numeral 51 denotes a projection of the cap 50, which is formed to prevent the ink from leaking from the main body 41 of the ink cartridge. Numeral 53 denotes a projection. By pressing the projection 53, the cap 50 can be easily disengaged from the main body 41. Numeral 71 denotes a projection by which the color of the ink in the cartridge can be determined. Numerals 81 and 82 denote a projection and a recess by which the cartridge can be easily disengaged from the printer.

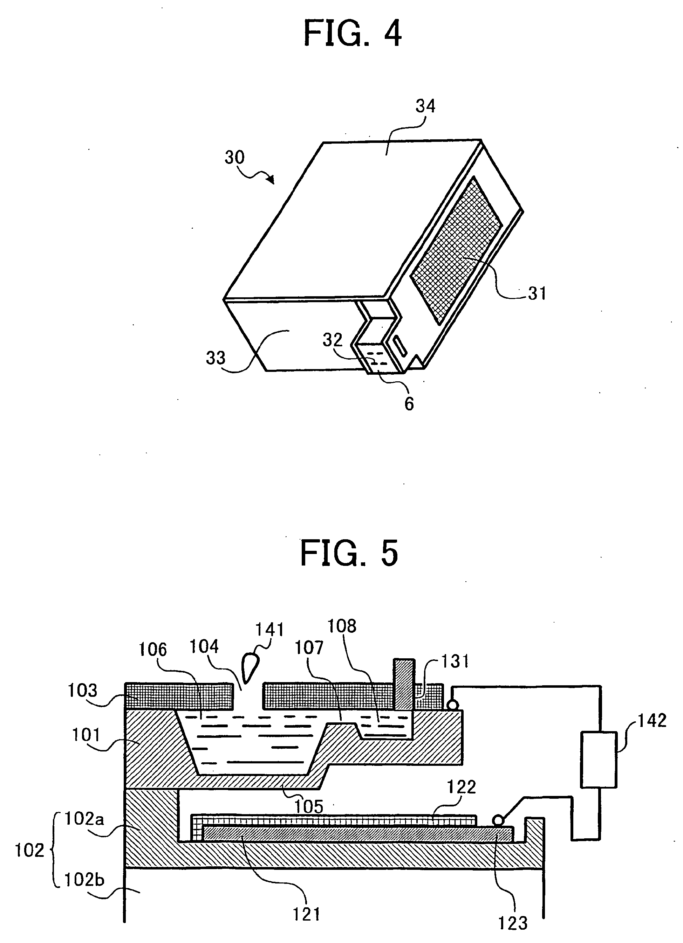

FIG. 4 is a schematic view illustrating the ink cartridge (i.e., a recording unit) having a container containing the inkjet ink of the present invention and a recording head discharging drops of the ink. Then the recording unit will be explained referring to FIG. 4.

A recording unit 30 is used for serial inkjet printers. The recording unit 30 includes, as main elements, a recording head 6, an ink tank 41 containing the recording ink to be supplied to the recording head 6, and a container cover 34 keeping the ink tank 33 airtight. The recording head 6 has plural nozzles 32 to discharge the inkjet ink. The inkjet ink is supplied from the ink tank 33 to an ink room (not shown) through an ink supplying tube (not shown). The inkjet ink in the ink room is discharged from the nozzles 32 according to electric signals input from the main body of the inkjet recording apparatus through an electrode 31. The recording unit of this type is typically used for so-called thermal- or bubble-inkjet recording heads which can be manufactured at a low cost and which utilizes heat energy as the power source for discharging ink drops.

The recording head discharging ink drops will be explained referring to FIG. 5. FIG. 5 is a cross sectional side view of an electrostatic inkjet recording head.

The recording head as shown FIG. 5 includes three single-crystal silicon substrates 101, 102 (i.e., 102a and 102b) and 103 which are overlaid while being adhered. The reason why single crystal silicon is used for the recording head is that a thin vibrating plate which has a thickness of about few micrometers and which is used for discharging ink can be easily prepared by an etching method. In addition, the material is advantageous because of being easily connected with a high degree of accuracy using an anode junction method.

In addition, when the vibrating plate is vibrated upon application of electrostatic force, it is needed to apply a voltage to an electrode to generate the electrostatic force. Since silicon is a semiconductor and can be easily processed so as to have a low resistance, the silicon substrate can serve as an electrode of the vibrating plate. Namely, silicon is advantageously used because an additional electrode need not to be formed on the vibrating plate side.

The intermediate substrate, i.e., the first substrate 101, has a first recessed portion forming an ink room 106 and having a bottom wall serving as a vibrating plate 105, a projection which is formed at the rear of the recessed portion and which forms an ink-flow-regulating portion 107 and a second recessed portion which forms an ink cavity 108 which commonly supplies the ink to the plural ink rooms 106.

The second substrate 102 which is adhered with the lower surface of the first substrate 101 is constituted of a single-crystal silicon substrate 102b and a silicon oxide layer 102a formed on the silicon substrate 102b. On the silicon oxide layer 102a, an electrode 121 which has a form similar to that of the vibrating plate 105 is formed. The electrode 121 has an electrode terminal portion 123. The electrode 121 is covered with an insulating layer 122 except for the terminal portion 123. The second substrate 102 can also be made of PYREX glass, etc.

The third substrate 103 which is adhered with the upper surface of the first substrate 101 has a nozzle 104. The third substrate 103 and first substrate 101 form the ink room 106, the ink-flow-regulating portion 107 and the ink cavity 108. The third substrate 103 also has an ink supplying opening 131 through which the ink is supplied to the ink cavity 108. The ink supplying opening 131 is connected with the ink cartridge (not shown) through a connecting pipe and a tube (not shown). The third substrate 103 can also be made of a material such as glass, nickel, plastics, stainless steel, etc.

When a positive pulse voltage is applied to the electrode 121 by an oscillating circuit 142 in the thus constructed inkjet recording head utilizing an electrostatic force, the surface of the electrode 121 is charged so as to have a positive potential and the vibrating plate 105 facing the electrode 121 is charged so as to have a negative potential, and thereby the vibrating plate 105 bends downward due to electrostatic attraction force.

When application of the pulse voltage to the electrode 121 is stopped, the bent vibrating plate 105 is returned to the former position, resulting in rapid increase of the pressure in the ink room 106, and thereby an ink drop 141 is discharged from the nozzle 104 toward a recording material (not shown). Then the vibrating plate 105 is again bent downward, and thereby the ink in the ink cavity 108 is supplied to the ink room 106 through the ink-flow-regulating portion 107. As the oscillating circuit 142, circuits which put on/off a pulse voltage or alternators can be used. When images are formed, electric pulses are applied to the electrode 121 according to image signals, to imagewise discharge ink drops from the nozzles 104.

Having generally described this invention, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

### Preparation of pigment dispersion

### Example 1

The following components were mixed.

| | |
|---|---|
| Pigment blue 15:3 (LINOL BLUE FG7351, from Toyo Ink Manufacturing Co., Ltd.) | 150 parts |
| Dispersant (compound having formula (1) wherein n = 40 and m = 0) Isopropanol solution of sodium | 110 parts |
| dioctylsulfosuccinate (solid content of 70%) | 2 parts |
| Distilled water | 738 parts |

The mixture was then subjected to a first dispersion treatment using a disc-type beads mill (KDL (of circulation type) from Shinmaru Enterprises Corporation) while the dispersed mixture was circulated to be repeatedly dispersed. The dispersing conditions are as follows.
Beads used: zirconia beads with a diameter of 0.3 mm
Peripheral speed of disc: 10 m/s
Temperature of liquid: 8 °C
Dispersing time: 180 min

The thus prepared first dispersion was then subjected to a second dispersion treatment for 30 minutes using a media-less mill (CLEAR SS5 from M Technique Co., Ltd.).

Thus, a pigment dispersion (A) was prepared.

The average particle diameter (D50) and the standard deviation of particle diameter of the pigment in the dispersion, which were determined using an instrument, UPA 150 from Nikkiso Co., Ltd., are shown in Table 1 below.

### Example 2

The following components were mixed.

| | |
|---|---|
| Carbon black (NIPEX 180, from Degussa A.G.) | 150 parts |
| Dispersant (polyoxyethylene (n=40) β-naphthyl ether) Isopropanol solution of sodium | 56 parts |
| dioctylsulfosuccinate (solid content of 70%) | 2 parts |
| Distilled water | 792 parts |

The mixture was then subjected to a first dispersion treatment using a disc-type beads mill (KDL (of batch type) from Shinmaru Enterprises Corporation). The dispersing conditions are as follows.
Beads used: zirconia beads with a diameter of 0.3 mm
Peripheral speed of disc: 10 m/s
Temperature of liquid: 10 °C
Dispersing time: 7 min
   The thus prepared first dispersion was then subjected to a second dispersion treatment for 30 minutes using a media-less mill (CLEAR SS5 from M Technique Co., Ltd.).
   Thus, a pigment dispersion (B) was prepared. The pigment dispersion (B) was also evaluated by the method mentioned above in Example 1.

### Examples 3 and 4

The procedure for preparation of the pigment dispersion (B) in Example 2 was repeated except that the carbon black was replaced with MCF88 or #45 (both of which are manufactured by Mitsubishi Chemical Corporation).

Thus, a pigment dispersion (C), which includes MCF88, and a pigment dispersion (D), which includes #45, were prepared. The pigment dispersions (C) and (D) were also evaluated by the method mentioned above in Example 1.

### Examples 5 and 6

The procedure for preparation of the pigment dispersion (B) in Example 2 was repeated except that dispersing time was changed to 5 minutes (Example 5) and 10 minutes (Example 6) to change the average particle diameter of the pigment and the standard deviation of particle diameter as described in Table 1 below.

Thus, pigment dispersions (E) and (F) were prepared. The pigment dispersions (E) and (F) were also evaluated by the method mentioned above in Example 1.

### Example 7

The procedure for preparation of the pigment dispersion (A) in Example 1 was repeated except that the media-free mill was replaced with another media free mill, Nanomizer (from Yoshida Kikai Co., Ltd.). The conditions of Nanomizer are as follows.
Pressure applied to liquid: 150 Mpa
Flow rate of liquid: 80 ml/min

Thus, a pigment dispersion (G) was prepared. The pigment dispersion (G) was also evaluated by the method mentioned above in Example 1.

### Example 8

The procedure for preparation of the pigment dispersion (A) in Example 1 was repeated except that the media-free mill was replaced with another media freemill, Ultimizer (from Sugino Machine Ltd.). The conditions of ultimizer are as follows.
Pressure applied to liquid: 200 Mpa
Flow rate of liquid: 500 ml/min
   Thus, a pigment dispersion (H) was prepared. The pigment dispersion (H) was also evaluated by the method mentioned above in Example 1.

### Example 9

The procedure for preparation of the pigment dispersion (A) in Example 1 was repeated except that the media-less mill was replaced with a media-free mill TK FILMIX (from Tokushu Kika Kogyo Co., Ltd.). The conditions of TK FILMIX are as follows.
Peripheral speed of wheel: 50 m/s
Dispersing time: 10 min
   Thus, a pigment dispersion (I) was prepared. The pigment dispersion (I) was also evaluated by the method mentioned above in Example 1.

### Example 10

The procedure for preparation of the pigment dispersion (A) in Example 1 was repeated except that the media-less mill was replaced with a media-less mill CAVITRON CD1010 (from EUROTECH, LTD.). The conditions of CAVITRON CD1010 are as follows.
Peripheral speed of rotor: 40 m/s
Dispersing time: 30 min

Thus, a pigment dispersion (J) was prepared. The pigment dispersion (J) was also evaluated by the method mentioned above in Example 1.

### Example 11

The procedure for preparation of the pigment dispersion (A) in Example 1 was repeated except that the media-less mill was replaced with a media-less mill MODULE DR2000 (from Shinmaru Enterprises Corporation). The conditions of MODULE DR2000 are as follows.
Peripheral speed of rotor: 30 m/s
Dispersing time: 60 min

Thus, a pigment dispersion (K) was prepared. The pigment dispersion (K) was also evaluated by the method mentioned above in Example 1.

### Example 12

The procedure for preparation of the pigment dispersion (A) in Example 1 was repeated except that the mixture was subj ected to a preliminarydispersion treatment before the first dispersion treatment. The conditions of the preliminary dispersion treatment are as follows.
Dispersing machine: CLEAR SS5 from M Technique Co., Ltd.
Dispersing time: 30 min
Number of rotation of disc: 20,000 rpm

Thus, a pigment dispersion (L) was prepared. The pigment dispersion (L) was also evaluated by the method mentioned above in Example 1.

### Comparative Examples 1 and 2

The procedures for preparation of the pigment dispersions (A) and (B) in Examples 1 and 2 were repeated except that the dispersing time was changed in the first dispersion treatment and the second dispersion treatment was not performed.

Thus, pigment dispersions (M) and (N) were prepared. The pigment dispersions (M) and (N) were also evaluated by the method mentioned above in Example 1.

### Comparative Examples 3 and 4

The procedure for preparation of the pigment dispersion (A) in Example 1 was repeated except that the dispersing time was changed in the first dispersion treatment to change the average particle diameter of the pigment and the standard deviation of particle diameter as described in Table 1 below.

Thus, pigment dispersions (O) and (P) were prepared. The pigment dispersions (O) and (P) were also evaluated by the method mentioned above in Example 1.

### Comparative Example 5

The procedure for preparation of the pigment dispersion (M) in Comparative Example 1 was repeated except that the added amount of polyoxyethylene (n=40) β-naphthyl ether was changed to 320 parts by weight.

Thus, pigment dispersion (Q) was prepared. The pigment dispersion (Q) was also evaluated by the method mentioned above in Example 1.

### Comparative Example 6

The procedure for preparation of the pigment dispersion (M) in Comparative Example 1 was repeated except that the added amount of polyoxyethylene (n=40) β-naphthyl ether was changed to 10 parts by weight.

Thus, pigment dispersion (R) was prepared. The pigment dispersion (R) was also evaluated by the method mentioned above in Example 1.

### Preparation of inkjet ink

The following components were mixed and the mixture was agitated for 30 minutes.

| | |
|---|---|
| Pigment dispersion prepared above (pigment dispersions (A)-(R)) | 100.0 parts |
| Glycerin | 7.5 parts |
| Diethylene glycol | 22.5 parts |
| 2-ethyl-1,3-hexyanediol | 3.0 parts |
| 2-pyrrolidone | 3.0 parts |
| Sodium salt of polyoxyethylene (3) alkyl (C13) ether acetate | 0.45 parts |
| Distilled water | 13.55 parts |

The mixture was then filtered with a Membrane filter having openings with a diameter of 0.8 µm, followed by deaeration in vacuum. In this regard, a Membrane filter having openings with a diameter of 1.2 µm was used for filtering the inks including one of the pigment dispersions (M) - (R).

Thus, inkjet inks (a) - (r) were prepared.

### Method for evaluating inks

### 1. Average particle diameters (D50(d), D50(i))

The average particle diameter (D50(d)) of pigment particles in each pigment dispersion and the average particle diameter (D50(i)) of each ink were measured with an instrument UPA 150 from Nikkiso Co., Ltd.

### 2. Printing property

### (1) Image density (ID)

Each ink was set in an inkjet printer, MJ-930 from Seiko Epson Corp. , and images were continuously formed on a plain paper 4024 for plain paper copiers to check the discharge stability of the ink. The image density of the images was measured with a densitometer from X-Rite.

### (2) Chroma

The a* value and b* value of the images produced in the printing test mentioned above in paragraph 2- (1) were measured with the densitometer from X-Rite. In this regard, chroma of an image is represented by the distance between the origin and the point (a*, b*) of the image in the chromaticity diagram). Namely, chroma of the image is defined as √ (a² + b²).

### 3. Discharging stability (DS)

After the printing test mentioned above, the printer was allowed to settle at 40 °C for 1 month while the printing head was covered with a cap. Then the printer was operated again to evaluate the discharging stability of the ink. The discharging stability is graded as follows.
○: Good images can be recorded after only one head cleaning operation.
Δ: Good images can be recorded after two or three head cleaning operations.
X: Good images cannot be recorded even after three head cleaning operations.

### 4. Preservability of ink (PS)

Each ink was set in a polyethylene container while the container was sealed. The container was preserved at 70 °C for three weeks. The average particle diameter, surface tension, and viscosity of each ink were measured before and after the preservation test to determine the preservability of the ink.

The preservability of the ink is graded as follows:
⊚: The variation of all the properties (i.e. , average particle diameter, surface tension and viscosity) of the ink before and after the preservation test is less than 5%.
○: The variation is not less than 5% and less than 10%.
Δ: The variation is not less than 10% and less than 30%.
X: The variation is greater than 30 %.

The results are shown in Table 1.

**Table 1**

| Example (Ink) | D50 (d) (nm) | SD (d) (nm) | D50(i) (nm) | ID | Chroma | DS | PS |
|---|---|---|---|---|---|---|---|
| Ex. 1 (a) | 48.3 | 21.6 | 48.5 | 1.10 | 54 | ○ | ○ |
| Ex. 2 (b) | 115.6 | 49.2 | 116.3 | 1.65 | - | ○ | ○ |
| Ex. 3 (c) | 92.5 | 39.3 | 92.6 | 1.50 | - | ○ | ○ |
| Ex. 4 (d) | 78.3 | 33.6 | 79.1 | 1.56 | - | ○ | ○ |
| Ex. 5 (e) | 121.3 | 51.1 | 122.2 | 1.68 | - | ○ | ○ |
| Ex. 6 (f) | 93.4 | 41.3 | 94.4 | 1.51 | - | ○ | ○ |
| Ex. 7 (g) | 49.2 | 22.7 | 50.3 | 1.11 | 53 | ○ | ○ |
| Ex. 8 (h) | 46.3 | 20.4 | 47.1 | 1.09 | 52 | ○ | ○ |
| Ex. 9 (i) | 48.6 | 21.1 | 48.9 | 1.10 | 54 | ○ | ○ |
| Ex. 10 (j) | 47.5 | 20.8 | 47.6 | 1.08 | 54 | ○ | ○ |
| Ex. 11 (k) | 48.3 | 21.5 | 48.3 | 1.00 | 51 | ○ | ○ |
| Ex. 12 (1) | 47.6 | 20.9 | 47.9 | 1.11 | 54 | ○ | ○ |
| Comp. Ex. 1 (m) | 62.2 | 48.9 | 63.9 | 1.05 | 44 | X | X |
| Comp. Ex. 2 (n) | 125.6 | 79.2 | 129.7 | 1.63 | - | X | X |
| Comp. Ex. 3 (○) | 198.6 | 105.3 | 209.3 | 1.02 | 45 | X | X |
| Comp. Ex. 4 (p) | 18.3 | 9.8 | 19.8 | 1.12 | 42 | X | X |
| Comp. Ex. 5 (q) | 83.2 | 54.9 | 84.6 | 0.97 | 41 | X | X |
| Comp. Ex. 6 (r) | 66.2 | 48.1 | 66.7 | 1.04 | 43 | X | X |

| | | | | | | | |
|---|---|---|---|---|---|---|---|
| Note: D50(d): Average particle diameter of pigment in pigment dispersion. SD(d): Standard deviation of pigment in pigment dispersion. D50(i): Average particle diameter of pigment in ink. ID: Image density Chroma: Chroma of image DS: Discharging stability of ink PR: Preservation stability of ink | | | | | | | |

It is clear from Table 1 that the pigment in a pigment dispersion has an average particle diameter (D50) of from 20 to 130 nm for a pigment other than carbon black or from 70 to 180 nm for a carbon black, and the standard deviation of the particle diameter of the pigment is less than the average particle diameter (D50) or one half of the average particle diameter (D50), the resultant ink has a good combination of discharge stability and preservation stability and can produce high quality images.

## Claims

1. A method for preparing a pigment dispersion, comprising:
subjecting a mixture comprising at least a pigment, a dispersant and water to a first dispersion treatment using a media mill to prepare a first dispersion; and
then subjecting the first dispersion to a second dispersion treatment using a media-less mill to prepare the pigment dispersion,
wherein when the pigment is a pigment other than carbon black, the pigment in the pigment dispersion has an average particle diameter (D50) of from 20 to 50 nm, and a standard deviation of particle diameter of less than the average particle diameter (D50), and when the pigment is a carbon black, the pigment in the pigment dispersion has an average particle diameter (D50) of from 70 to 180 nm, and a standard deviation of particle diameter of not greater than one half of the average particle diameter (D50).

2. The method according to Claim 1, wherein the pigment in the first dispersion has an average particle diameter of from 100 nm to 300 nm.

3. The method according to Claim 1, further comprising:
subjecting the mixture comprising at least the pigment, the dispersant and water to a preliminary dispersion treatment using a media-less mill before the first dispersion treatment to prepare a preliminary dispersion, wherein the pigment in the preliminary dispersion has an average particle diameter of from 200 nm to 600 nm, and
wherein the pigment in the first dispersion has an average particle diameter of from 80 nm to 130 nm.

## Patentansprüche

1. Verfahren zum Herstellen einer Pigmentdispersion, umfassend:
Unterwerfen einer Mischung, umfassend mindestens ein Pigment, ein Dispergiermittel und Wasser, einer ersten Dispergierbehandlung unter Verwendung einer Mühle mit Medium, um eine erste Dispersion herzustellen; und
dann Unterwerfen der ersten Dispersion einer zweiten Dispergierbehandlung unter Verwendung einer Mühle ohne Medium, um die Pigmentdispersion herzustellen,
wobei wenn das Pigment ein von Ruß verschiedenes Pigment ist, das Pigment in der Pigmentdispersion einen mittleren Teilchendurchmesser (D50) von 20 bis 50 nm und eine Standardabweichung des Teilchendurchmessers von weniger als dem mittleren Teilchendurchmesser (D50) hat, und wenn das Pigment ein Ruß ist, das Pigment in der Pigmentdispersion einen mittleren Teilchendurchmesser (D50) von 70 bis 180 nm und eine Standardabweichung des Teilchendurchmessers von nicht mehr als die Hälfte des mittleren Teilchendurchmessers (D50) hat.

2. Verfahren gemäß Anspruch 1, wobei das Pigment in der ersten Dispersion einen mittleren Teilchendurchmesser von 100 bis 300 nm hat.

3. Verfahren gemäß Anspruch 1, ferner umfassend:
Unterwerfen der Mischung, umfassend mindestens das Pigment, das Dispergiermittel und Wasser, einer vorbereitenden Dispergierbehandlung unter Verwendung einer Mühle ohne Medium vor der ersten Dispergierbehandlung, um eine vorläufige Dispersion herzustellen, wobei das Pigment in der vorläufigen Dispersion einen mittleren Teilchendurchmesser von 200 bis 600 nm hat, und
wobei das Pigment in der ersten Dispersion einen mittleren Teilchendurchmesser von 80 bis 130 nm hat.

## Revendications

1. Procédé de préparation d'une dispersion de pigment, comprenant les étapes consistant à :
soumettre un mélange comprenant au moins un pigment, un agent de dispersion et de l'eau à un premier traitement de dispersion en utilisant un broyeur à milieu pour préparer une première dispersion ; puis
soumettre la première dispersion à un second traitement de dispersion en utilisant un broyeur sans milieu pour préparer la dispersion de pigment,
dans lequel, lorsque le pigment est un pigment autre que le noir de charbon, le pigment dans la dispersion de pigment présente un diamètre moyen de particule (D50) de 20 à 50 nm, et un écart-type de diamètre de particule inférieur au diamètre moyen de particule (D50), et lorsque le pigment est un noir de charbon, le pigment dans la dispersion de pigment présente un diamètre moyen de particule (D50) de 70 à 180 nm, et un écart-type de diamètre de particule non supérieur à la moitié du diamètre moyen de particule (D50).

2. Procédé selon la revendication 1, dans lequel le pigment dans la première dispersion présente un diamètre moyen de particule de 100 nm à 300 nm.

3. Procédé selon la revendication 1, comprenant en outre l'étape consistant à :
soumettre le mélange comprenant au moins le pigment, l'agent de dispersion et de l'eau à un traitement de dispersion préliminaire en utilisant un broyeur sans milieu avant le premier traitement de dispersion pour préparer une dispersion préliminaire, dans lequel le pigment dans la dispersion préliminaire présente un diamètre moyen de particule de 200 nm à 600 nm, et
dans lequel le pigment dans la première dispersion présente un diamètre moyen de particule de 80 nm à 130 nm.
